Europäisches Patentamt

European Patent Office

Office européen des brevets

(11) Publication number: **0 228 786 B1**

# EUROPEAN PATENT SPECIFICATION

(45) Date of publication of patent specification: **10.06.92**   (51) Int. Cl.⁵: **H04K 3/00**

(21) Application number: **86308589.0**

(22) Date of filing: **04.11.86**

(54) **Radio signal interference cancellation system.**

(30) Priority: **23.12.85 JP 287881/85**
**20.03.86 JP 60856/86**
**20.03.86 JP 60857/86**
**03.04.86 JP 75555/86**
**03.04.86 JP 75556/86**

(43) Date of publication of application:
**15.07.87 Bulletin 87/29**

(45) Publication of the grant of the patent:
**10.06.92 Bulletin 92/24**

(84) Designated Contracting States:
**DE FR GB IT NL**

(56) References cited:
**EP-A- 0 285 403**
**US-A- 4 278 978**
**US-A- 4 320 535**

(73) Proprietor: **NIPPON TELEGRAPH AND TELE-
PHONE CORPORATION**
**1-6 Uchisaiwaicho 1-chome Chiyoda-ku
Tokyo(JP)**

(72) Inventor: **Matsue, Hideaki**
**3-306, 2-1-3, Hayashi
Yokosuka-shi Kanagawa(JP)**
Inventor: **Murase, Takehiro**
**4-17-8, Negishi-cho
Yokosuka-shi Kanagawa(JP)**

(74) Representative: **Skone James, Robert Edmund
et al
GILL JENNINGS & EVERY 53-64 Chancery
Lane
London WC2A 1HN(GB)**

**Description**

This invention relates to an interference cancellation system which cancels an undesired interference signal in a radio communication receiver.

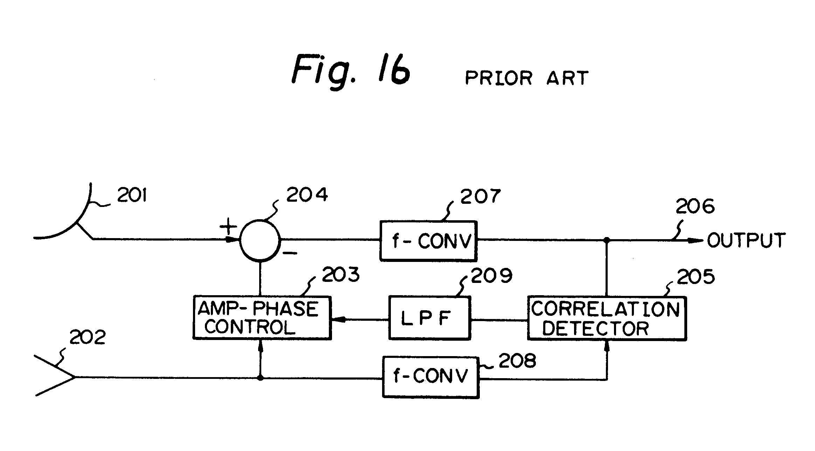

A conventional system for cancelling an interference signal is shown in Fig. 16 of the accompanying drawings. The system comprises a main antenna 201 which receives both the desired signal and the undesired interference signal, an auxiliary antenna 202 which receives only the undesired interference signal, an amplitude-phase control circuit 203, a combiner 204, a correlation detector 205, frequency converters 207 and 208, each of which includes an amplifier, a low-pass filter 209, and an output terminal 206 which provides the output signal which is free from the interference signal. The main antenna 201 is directed towards a desired signal source, but receives both the desired signal and the undesired interference signal. The auxiliary antenna 202 is directed to the undesired interference signal source, and receives only the interference signal. The interference signal received by the auxiliary antenna 202 is applied to the amplitude-phase control circuit 203 which adjusts the amplitude and the phase of the interference signal so that the output of the control circuit 203 has an equal amplitude to, and is in anti-phase with, that of the interference signal received by the main antenna 201. Hence, when the combiner 204 combines the interference signal from the main antenna with the output of the amplitude-phase control circuit 203, the interference signal is cancelled, and the desired signal is obtained at the output of the combiner. The control signal for controlling the amplitude-phase control circuit 203 is obtained by the correlation detector 205, which provides the correlation between the undesired signal received by the main antenna 201 and the undesired interference signal received by the auxiliary antenna 202.

However, when the apparatus of Fig. 16 is implemented, the correlation circuit and the control circuit must satisfy many requirements, which are not easy. Therefore, the basic circuit of Fig. 16 is not practical.

A practical prior art circuit is shown in US-A-4 384 366 (corresponding to West German Patent) DE-C-31 10 602, British Patent No. 2 072 995, French Patent FR-A-2479619 and Canadian Patent No. 1 167 158). In that circuit, a single frequency converter is used, and an interference signal is applied to an amplitude-phase control circuit which provides the compensation signal, having the equal amplitude and the anti-phase, to a combiner in a main signal path. In order to adjust the amplitude and phase of a control signal in the amplitude-phase control circuit, the control signal is subjected to perturbation by a low-frequency signal. The residual interference component, which fluctuates in accordance with the low-frequency signal, is detected by an envelope detector. The correlation is taken between the residual interference component and the low-frequency signal. The control is effected so that the correlation is minimised.

However, that technique has the disadvantage that the circuit structure is complicated, because of the presence of the perturbation circuit and an additional envelope detector.

EP-A-0085403 describes an interference cancellation system for removing narrow-band FM interference from a received signal in a digital microwave communications system using a single antenna and narrow-band filter to derive the interference signal.

It is an object of the present invention to provide an improved interference cancellation system. According to the invention there is provided an interference cancellation system, signal reception means which receive a desired digital signal and an undesired interference signal; a control means for providing a compensation signal having substantially the same amplitude as that of the interference component in the main signal and in anti-phase thereto; a combiner for combining the main signal and an output of the control means to cancel the interference component in the main signal; a first quadrature phase detector; a phase detector for phase detecting the interference signal, an error signal detector and correlation means for providing correlation between the output of the error signal detector and the output of the phase detector for the interference signal; the control means being controlled by the output of the correlation means; the signal reception means comprising a main signal reception means which receives a desired digital signal and an undesired interference signal and auxiliary signal reception means for receiving the undesired interference signal; characterised in that the first quadrature phase detector demodulates the main signal; in that the phase detector for phase detecting the interference signal is a second quadrature phase detector; in that the second quadrature phase detector is supplied with a clock signal obtained by the first quadrature phase detector; in that a decision circuit is coupled to the output of the first quadrature phase detector to provide a demodulated digital signal; in that the error signal detector provides the difference between the decision level of the digital signal and the output of the first quadrature phase detector and that the error signal detector is implemented by an A/D converter which doubles as the decision circuit; and in that the combiner is inserted in a baseband stage.

Embodiments of the invention will now be described, by way of example, together with comparative examples, with reference to the accompanying drawings, in which

Fig. 1 is a block diagram of a first comparative example of an interference cancellation system;

Fig. 2 is a vector diagram which illustrates the operation of the system of Fig. 1;

Fig. 3 is a block diagram of a second comparative example of an interference cancellation system;

Fig. 4 illustrates the operation of an analog/digital (A/D) converter which provides both a decision signal and an error signal;

Fig. 5 is a block diagram of a third comparative example of an interference cancellation system;

Fig. 6 is a block diagram of a fourth comparative example of an interference cancellation system;

Fig. 7 is a block diagram of a fifth comparative example of an interference cancellation system;

Fig. 8 is a block diagram of a sixth comparative example of an interference cancellation system;

Fig. 9 is a diagram illustrating the operation of an error signal detector;

Fig. 10 is a block diagram of a seventh comparative example of an interference cancellation system;

Fig. 11 is a block diagram of an eighth comparative example of an interference cancellation system;

Fig. 12 is a block diagram of a first embodiment of an interference cancellation system according to the invention;

Fig. 13 is a block diagram of a second embodiment of an interference cancellation system according to the invention;

Fig. 14 is a block diagram of a control circuit in the system of Fig. 13;

Fig. 15 is a block diagram of an asynchronisation detector in the system of Fig. 13; and,

Fig. 16 is a block diagram of a prior interference cancellation system, as mentioned above.

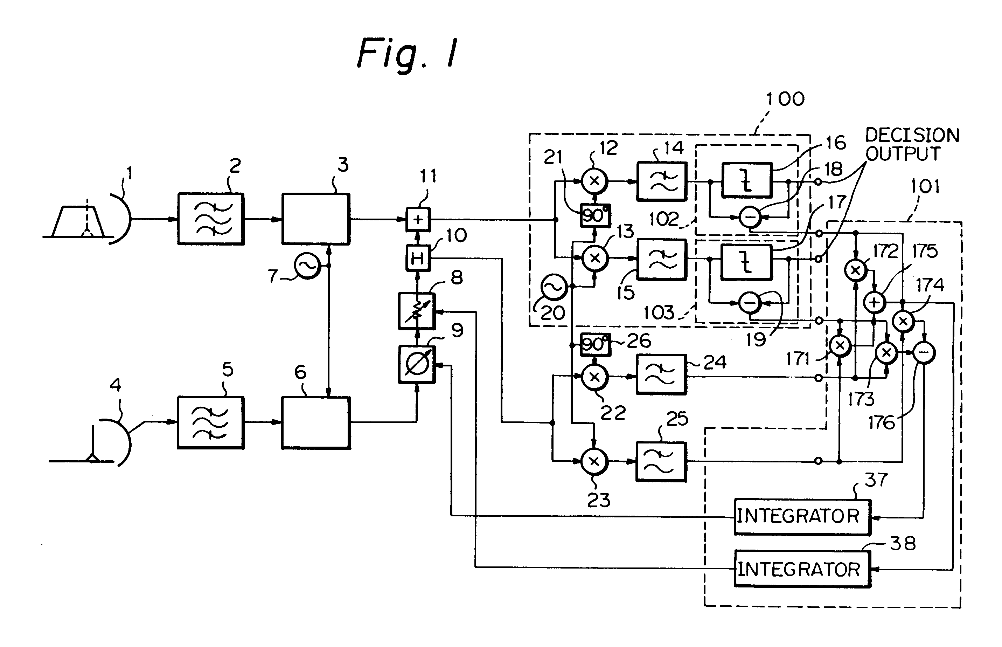

Fig. 1 shows a block diagram of an interference cancellation system. The system comprises a main antenna 1 which receives both a desired main signal and an undesired interference signal and an auxiliary antenna 4 which receives only the undesired interference signal. The main signal received by the main antenna 1 is applied, through a bandpass filter 2, to a frequency converter 3 which converts the radio/frequency signal to an IF (intermediate frequency) signal. The interference signal received by the auxiliary antenna 4 is applied to another frequency converter 6 through a bandpass filter 5. A common local oscillator 7 supplies the local frequency to both of the frequency converters 3 and 6. The interference signal at the output of the frequency converter 6 is applied to a combiner 11 through a variable phase shifter 9, a variable attenuator 8 and a signal divider 10. The combiner 11 combines the main signal, which includes the interference signal, with the output of the divider 10 so that the interference component in the main signal is cancelled. The output signal of the divider 10 has the same amplitude and the anti-phase as those of the interference signal in the main signal.

The main signal at the input of the combiner 11 is expressed as follows.

$$Y_1(t) = \sum_{k=-\infty}^{\infty} (a_k + jb_k)\, r(t-kT)\, e^{j\omega_1 t} + f(t)\, e^{j(\omega_2 t + \theta)} \qquad (1)$$

When the main signal is 16QAM (quadrature amplitude modulation signal with 16 levels), $a_k$ and $b_k$ are $\pm 1, \pm 3$. The $r(t)$ is the impulse response of the whole system, and when the system is a Nyquist transmission system, $r(0) = 1$, and $r(kT) = 0$, where k is an integer and $k \neq 0$. The symbol T is clock period, $\omega_1$ is angular frequency of the carrier wave of the main signal. It is assumed that the interference signal is an amplitude modulation signal, and f(t) is the amplitude, $\theta$ is the phase and $\omega_2$ is the angular frequency of the interference signal.

The output of the divider 10 applied to the combiner 11 is expressed as follows when the system operates correctly.

$$Y_2(t) = (f(t) + \Delta r)\, e^{j(\omega_2 t + \theta + \Delta\theta + \pi)} \qquad (2)$$

where $\Delta r$ and $\Delta\theta$ are assumed to be very small.

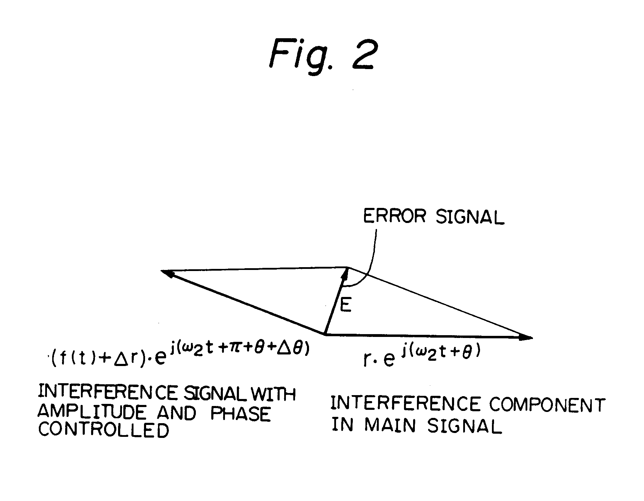

The combiner 11 adds the signals of the equations (1) and (2), and the residual interference component E is shown in the vector diagram in Fig.2, where the residual interference component E is the vector difference between the interference component in the main signal, and the interference signal at the output of the divider 10.

The output of the combiner 11 which includes the residual interference component is applied to the demodulator 100 which has a pair of coherent quadrature phase detectors 12 and 13, and a pair of low-pass filters 14 and 15. The in-phase component $i_1(t)$ and the quadrature component $q_1(t)$ at the outputs of the filters 14 and 15, respectively, are expressed as follows.

$$i_1(t) = \sum_{k=-\infty}^{\infty} a_k \ r(t-kT) + [-\Delta r \ \cos(\Delta\omega t + \theta) + f(t)\Delta\theta \ \sin(\Delta\omega t + \theta)] \quad (3)$$

$$q_1(t) = \sum_{k=-\infty}^{\infty} b_k \ r(t-kT) + [-\Delta r \ \sin(\Delta\omega t + \theta) - f(t)\Delta\theta \ \cos(\Delta\omega t + \theta)] \quad (4)$$

On the other hand, the interference component which is divided by the divider 10 is applied to the quadrature phase detectors 22 and 23, which use the same local frequency 20 as that of the previous phase detectors 12 and 13 for the main signal. The outputs of the detectors 22 and 23 are applied to the low-pass filters 24 and 25. Thus, the in-phase component $i_2$ and the quadrature component $q_2$ of the interference signal at the outputs of the filters 24 and 25 are expressed as follows.

$i_2(t) = (f(t) + \Delta r) \cos(\Delta\omega t + \theta' + \Delta\theta + \pi) \fallingdotseq -f(t) \cos(\Delta\omega t + \theta')$     (5)

$q_2(t) = (f(t) + \Delta r) \sin(\Delta\omega t + \theta' + \Delta\theta + \pi) \fallingdotseq -f(t) \sin(\Delta\omega t + \theta')$     (6)

where $\Delta\omega$ is the difference between $\omega_1$ and $\omega_2$, and $\theta'$ is the initial phase difference.

The demodulated main signals at the outputs of the low-pass filters 14 and 15 are applied to the decision circuits 16 and 17, respectively. The outputs of the decision circuits 16 and 17 are the baseband digital signal.

The error signal is obtained by taking the difference between the output signal and the input signal of the decision circuit. The error signal detectors l02 and l03 provide said difference, and provide the in-phase error signal $E_i(t)$ and the quadrature error signal $E_q(t)$, respectively, as shown below.

$E_i(t) = -\Delta r \cos(\Delta\omega t + \theta) + f(t)\Delta\theta \cdot \sin(\Delta\omega t + \theta)$     (7)

$E_q(t) = -\Delta r \sin(\Delta\omega t + \theta) - f(t)\Delta\theta \cdot \cos(\Delta\omega t + \theta)$     (8)

The correlation between the error signals of the equations (7) and (8), and the interference signals of the equations (5) and (6) are taken in the control circuit 101.

The multiplier 171 provides the product of $i_2(t)$ and $E_i(t)$, and the multiplier 172 provides the product of $q_2(t)$ and $E_q(t)$, respectively. The following signal is obtained at the output of the low-pass filter 38 which receives the output of either the multiplier 171 or the multiplier 172.

$i_2(t) \times E_i(t) = q_2(t) \times E_q(t) = f(t) \ \Delta r \ \cos(\theta - \theta')$     (9)

the control signal applied to the low-pass filter 38 is the sum of the outputs of the multipliers 171 and 172 in the comparative example of Fig 1 so that the control gain is higher.

Similarly, the multiplier 173 which provides the product of $q_2(t)$ and $E_i(t)$, the multiplier 174 which provides the product of $i_2(t)$ and $E_q(t)$, and the low-pass filter 37 provide the following control signal.

$q_2(t) \times E_i(t) = -i_2(t) \times E_q(t) = -f^2(t) \ \Delta\theta \ \cos(\theta - \theta')$     (10)

The control signal applied to the low-pass filter 37 is the difference of the multipliers 173 and 174 so that the higher control gain is obtained.

It should be appreciated that the symbol $\theta$ and the symbol $\theta'$ show the initial phase, and do not fluctuate. So, when the initial phase is set so that $\theta = \theta'$ is satisfied, the equation (9) is proportional to $\Delta r$, and the equation (10) is proportional to $\Delta\theta$.

Therefore, the result of the equation (9), which is the output of the low-pass filter 38, can control the variable attenuator 8, and the result of the equation (10), which is the output of the low-pass filter 37, can control the variable phase shifter 9 so that $\Delta r$ and $\Delta\theta$ are controlled to provide the cancellation of the interference component included in the main signal.

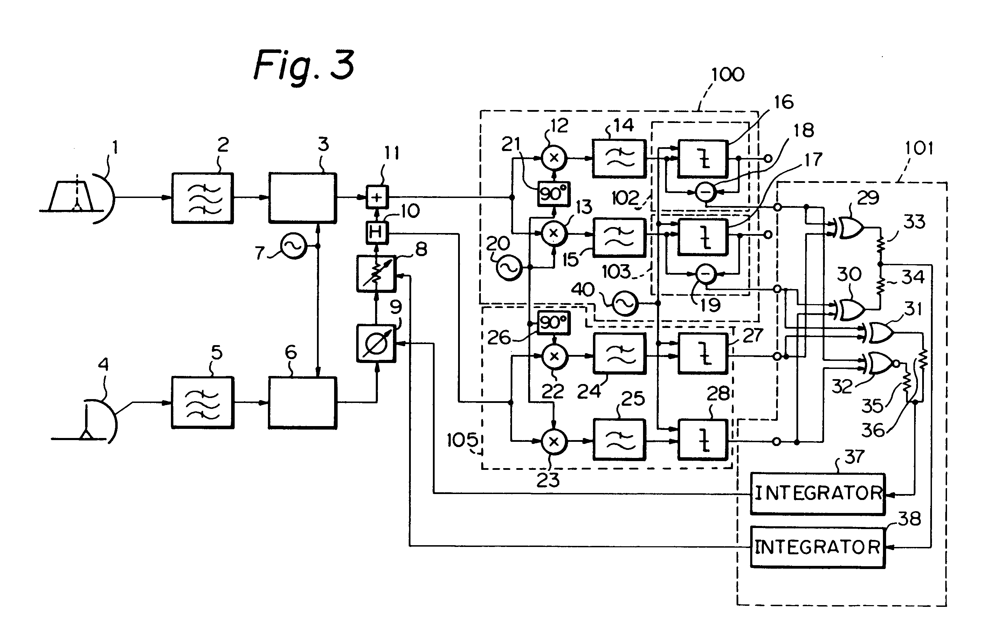

Fig.3 shows a modification of the interference cancellation system of Fig.1. In Fig.3, both the main signal and the interference signal are detected by the quadrature phase detectors 12, 13, 22 and 23, by using the common recovered carrier wave 20, and the detected signals are processed by the low-pass filters 14, 15, 24 and 25. The detected main signals are applied to the decision circuits 16 and 17. The subtractors 18 and 19 provide the difference between the input of the decision circuit and the output of the decision circuit. The polarity of the difference is the same as the polarity of the interference component included in the main signal.

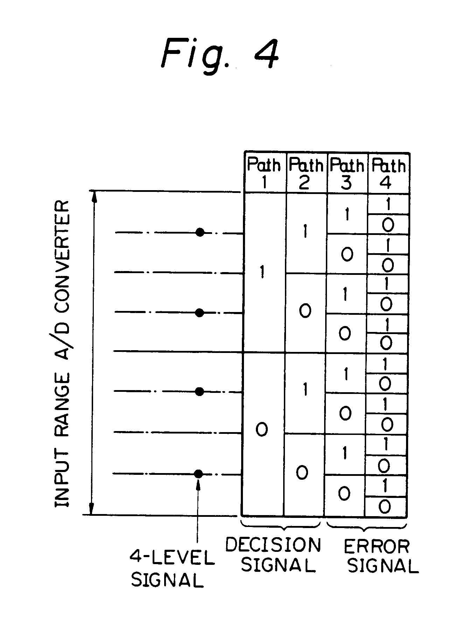

Fig.4 shows the above operation for a 16 QAM signal, which provides a pair of 4 level demodulated signals. The decision circuit and a subtractor for providing the error signal are implemented by an A/D converter which has 3 output bits. Among the output bits of the A/D converter, the highest 2 bits provide the decision signal with 4 levels, and the third bit shows the polarity or the sign of an error signal.

When the error signal is positive, the polarity is indicated by "1", and when the error signal is negative, the polarity is indicated by "0", so that the error signals are calculated by using an exclusive-OR circuit.

The polarity of an error signal which is sampled for every clock period T is shown by the following equations.

$$\text{sgn}[E_i(mT)] = \text{sgn}[-\Delta r \bullet \cos(\Delta\omega mT + \theta) + f(t)\Delta\theta\ \sin(\Delta\omega mT + \theta)] \qquad (11)$$
$$\text{sgn}[E_q(mT)] = \text{sgn}[-\Delta r \bullet \sin(\Delta\omega mT + \theta) - f(t)\Delta\theta\ \cos(\Delta\omega mT + \theta)] \qquad (12)$$

On the other hand, the decision circuits 27 and 28 provide the polarity of the sign of the interference signal as shown in the following equations, where it is assumed that the sampling clock signal 40 for the interference signal is the same as that of the main signal.

$$\text{sgn}[i_2(mT)] = -\text{sgn}[\cos(\Delta\omega mT + \theta')] \qquad (13)$$
$$\text{sgn}[q_2(mT)] = -\text{sgn}[\sin(\Delta\omega mT + \theta')] \qquad (14)$$

When the equations (13) and (14) are compared with the equations (5) and (6), it is noted that the f(t) is omitted in the equations (13) and (14), because the equations (13) and (14) calculate only the sign or the polarity, and the sign of the f(t) is positive.

Next, the following calculations are carried out for $\text{sgn}[E_i(mT)]$, $\text{sgn}[E_q(mT)]$, $\text{sgn}[i_2(mT)]$, and $\text{sgn}[q_2(mT)]$.

First, the digital multiplication of $\text{sgn}[i_2(mT)]$ and $\text{sgn}[E_i(mT)]$ by using the exclusive-OR circuit 30 and the low-pass filter 38 provides the signal shown by the following equation.

$$\text{sgn}[i_2(mT)]\text{x}\,\text{sgn}[E_i(mT)] = -\text{sgn}[-\Delta r\ \cos(\theta-\theta') + f(t)\Delta\theta\ \sin(\theta-\theta')] \qquad (15)$$

Similarly,

$$\text{sgn}[q_2(mT)]\text{x}\,\text{sgn}[E_q(mT)] = -\text{sgn}[-\Delta r\ \cos(\theta-\theta') + f(t)\Delta\theta\ \sin(\theta-\theta')] \qquad (16)$$

Similarly,

$$\text{sgn}[q_2(mT)]\text{x}\,\text{sgn}[E_i(mT)] = -\text{sgn}[\Delta r\ \sin(\theta-\theta') + f(t)\Delta\theta\ \cos(\theta-\theta')] \qquad (17)$$

Similarly,

$$-\text{sgn}[i_2(mT)]\text{x}\,\text{sgn}[E_q(mT)] = -\text{sgn}[\Delta r\ \sin(\theta-\theta') + f(t)\Delta\theta\ \cos(\theta-\theta')] \qquad (18)$$

When $\theta = \theta'$ is assumed as is the case of the comparative example of Fig.1, the equations (19) and (20) are obtained, and the amplitude error $\Delta r$, and the phase error $\Delta\theta$ are obtained.

$$\text{sgn}[i_2(mT)]\text{x}\,\text{sgn}[E_i(mT)] = \text{sgn}[q_2(mT)]\text{x}\,\text{sgn}[E_q(mT)] = + \text{sgn}(\Delta r) \qquad (19)$$
$$\text{sgn}[q_2(mT)]\text{x}\,\text{sgn}[E_i(mT)] = -\text{sgn}[i_2(mT)]\text{x}\,\text{sgn}[E_q(mT)] = -\text{sgn}(\Delta\theta) \qquad (20)$$

Accordingly, the result of the equation (19) (the output of the low-pass filter or the integrator 38) can control the variable attenuator 8, and the result of the equation (20) (the output of the low-pass filter or the integrator 37) can control the variable phase shifter 9. Thus, the interference component in the main signal is cancelled. As the result of the equation (15) is the same as that of the equation (16), and the result of the equation (17) is the same as that of the equation (18), the comparative example of Fig.3 takes the sum of the two signals in order to increase the control gain.

Some modifications of Figs.1 and 3 are possible to those skilled in the art.

For instance, a variable attenuator and a variable phase shifter may be inserted in an RF (radio frequency) stage which is up-stream of a frequency converter, instead of an IF (intermediate frequency) stage of Figs.1 and 3.

The interference component is not restricted to an amplitude modulation signal, because any modulation signal may be cancelled although the above example is directed to an amplitude modulation signal as the interference signal.

Further, an interference signal received by an auxiliary antenna may be divided at the input of the variable phase shifter, or at the input of the variable attenuator. In that case, the divided interference comnent may have a higher level than that of the comparative example of Figs.1 and 3 which divide the interference component at the output of the variable attenuator 8. When the divided interference component has the higher level, the sensitivity in the quadrature phase detection is increased. In that case, $(f(t)+\Delta r = r)$ in the equation (2) is replaced by another value r', which is positive value as well as r, and the equations (9), (10), (19) and (20) are satisfied when r is replaced by r'. Therefore, the control of the amplitude and the phase for interference component is possible.

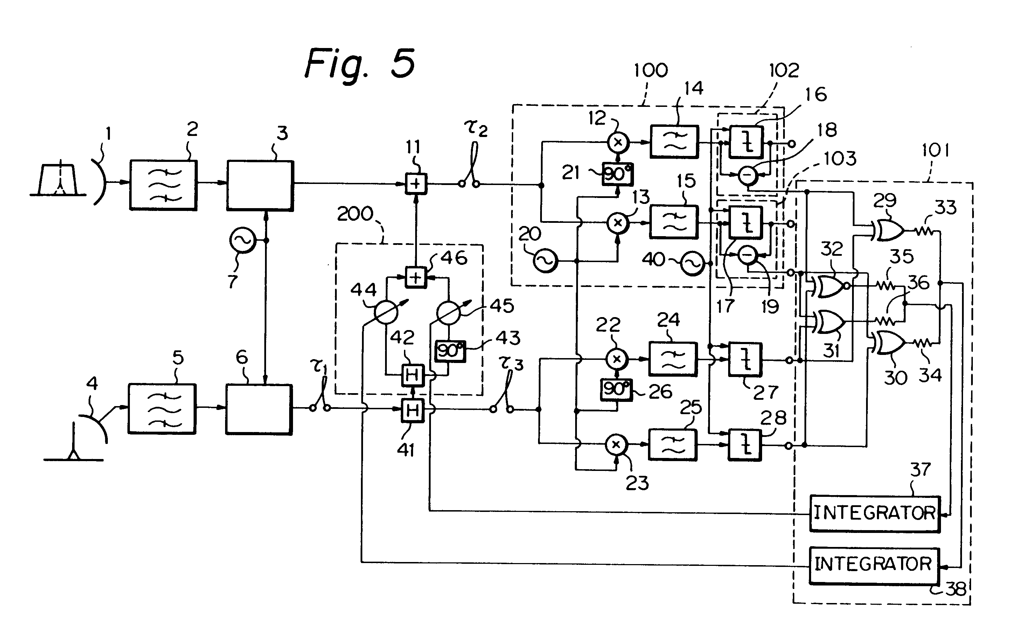

Fig.5 shows a modification of the comparative example of Fig.3. The features of the example of Fig.5 are the use of a quadrature amplitude modulator 200 instead of a variable attenuator and a variable phase shifter, and the use of delay lines $(\tau_1)$, $(\tau_2)$, and $(\tau_3)$.

The quadrature amplitude modulator 200 has a divider 42 (or a hybrid circuit) for separating signals to two paths, a bipolar attenuator 44 which receives one of the outputs of the divider 42, a 90° phase shifter 43 coupled with another output of the divider 42, another bipolar attenuator 45 coupled to the output of the 90° phase shifter 43, and a combiner 46 for combining outputs of the bipolar attenuators 44 and 45. The output of the combiner 46 is applied to the combiner 11 which combines the main signal with the output of the quadrature amplitude modulator 200. A bipolar attenuator 44 (or 45) operates in both polarities, positive polarity and negative polarity. The bipolar attenuators 44 and 45 are controlled by the outputs of the low-pass filters (or the integrators) 38 and 37, respectively. The input to the divider 42 is separated by the divider 41 which is inserted in an interference signal path.

The delay lines $(\tau_1)$, $(\tau_2)$ and $(\tau_3)$, which are inserted at the output of the frequency converter 6, at the output of the combiner 11, and at the output of the divider 41, respectively, function to coincide the timing of the main signal and the compensation signal at the combiner 11. Those delay lines are useful to improve the effect of the cancellation of the interference component.

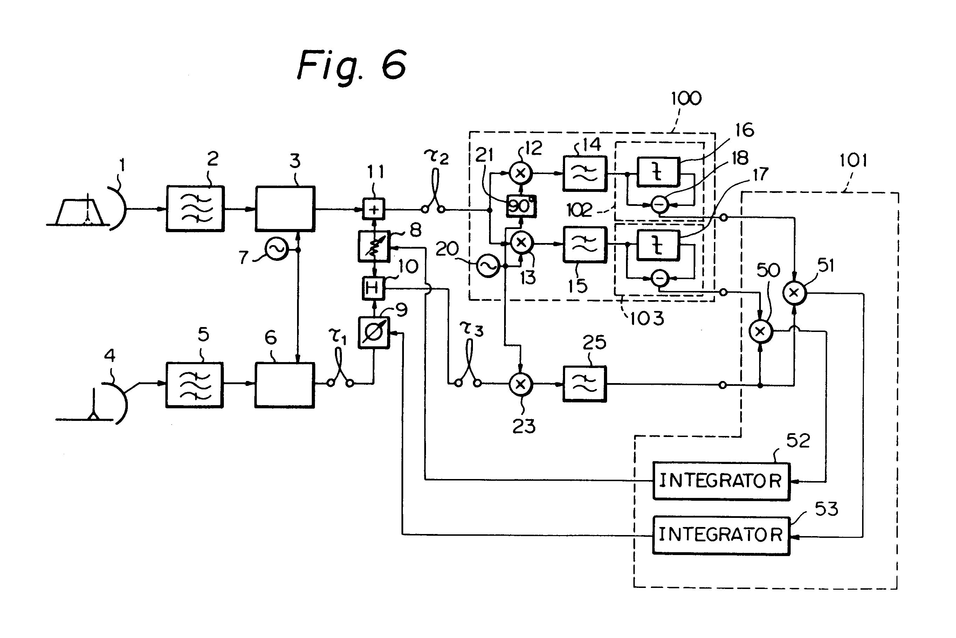

Fig.6 shows another comparative example of an interference cancellation system. The feature of Fig.6 as compared with the example of Fig.1 is the use of an ordinary phase detector 23, instead of a quadrature phase detector 22, 23 in Fig.1. The delay lines $(\tau_1)$, $(\tau_2)$, and $(\tau_3)$ are used in the embodiment of Fig.6. The phase detector 23 in Fig.6 is supplied with the same recovered carrier 20 as that of the quadrature phase detector 12 and 13 for the main signal.

In the example of Fig.6, $q_2(t)$ in the equation (6) does not exist. Accordingly, the equations (9) and (10) are changed as follows, respectively.

$$i_2(t) \times E_i(t) = f(t)\Delta r \cos(\theta - \theta') \qquad (9')$$
$$i_2(t) \times E_q(t) = f^2(t)\Delta\theta\cos(\theta - \theta') \qquad (10')$$

Therefore, the comparative example of Fig.6 operates similar to that of Fig.1, except that the sensitivity of Fig.6 is a little lower than that of Fig.1 due to the non-existance of adder 175 and subtractor 176.

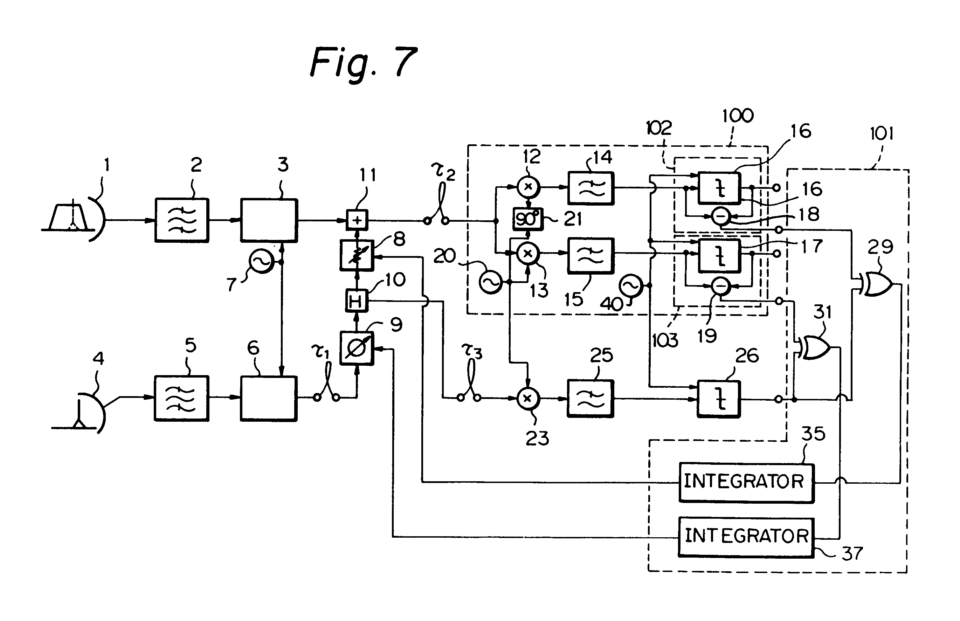

Fig.7 is a modification of Fig.6, and the feature of Fig.7 is the use of the decision circuit 26 in the interference signal path, and the use of the exclusive-OR circuits 29 and 31 in the correlation circuit 101. The use of the decision circuit in the interference path together with the exclusive-OR circuit in the correlation circuit are described in accordance with Fig.3.

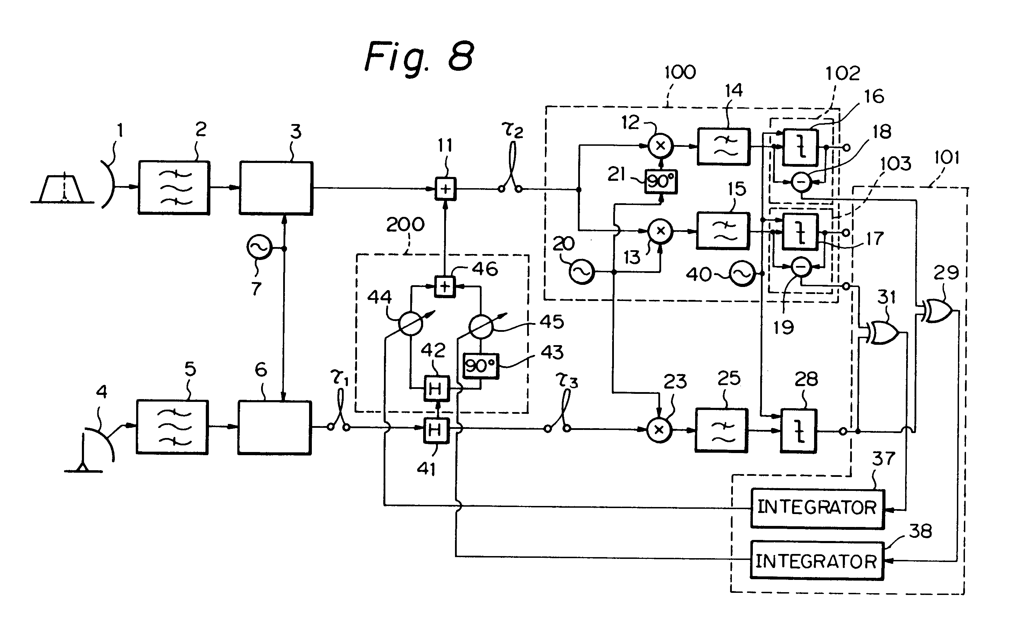

Fig.8 is a modification of the comparative example of of Fig.7, and the feature of Fig.8 is the use of a quadrature amplitude modulator 200, instead of a variable attenuator and a variable phase shifter in Fig.7. The structure and the operation of the quadrature amplitude modulator are described in accordance with Fig.5.

Some other modifications are possible to those skilled in the art.

The above description was directed to 16 QAM signal as a main signal. However, the main signal in the present invention is not restricted to 16 QAM signal, but any other signal, including 4 PSK signal, and 64 QAM signal is possible as main signal. When 4 PSK signal or 64 QAM signal are used as a main signal, the number of output bits of the A/D converter must be designed according to the specific main signal.

The interference signal is not restricted to an amplitude modulation signal, which has been described. When an interference signal is an FM signal, $f(t)e^{j(\omega 2^t + \theta)}$ in the equations (1) and (2) is replaced by $fe^{j(\omega 2^{(t)}t + \theta)}$. When the interference signal is a phase modulation signal, said term in the equations (1) and (2) is replaced by $fe^{j(l_2 t + R(T))}$. Also, when the interference signal is a CW wave, said term is replaced by $fe^{j(l_2 t + r)}$.

In the comparative example of of Figs. 1, 3, 6 and 7, a divider 10 may be inserted at the output of a variable attenuator, or at the input of a variable phase shifter. Although the cancellation of the interference signal is effected in an IF stage in those embodiments, cancellation in an RF stage is of course possible.

In the above example the compensation signal is obtained by adjusting the amplitude and phase of the interference signal which is received by the auxiliary antenna. It should be noted, however, that the compensation signal may alternatively be obtained by adjusting the amplitude and phase of the main signal received by the main antenna.

Further, the adjustment of phase of a signal may be effected either by adjusting the signal itself, or by adjusting the phase of the local oscillator.

In the above example error signal detectors 102 and 103 are implemented by an A/D converter which has more than 3 output bits when a 16 QAM signal is involved. An error signal is obtained from the third bit as shown in Fig. 4. When a $2^{2n}$ level QAM signal is involved, the demodulated baseband signal is a $2^N$ level signal. In that case, the A/D converter must have $N + 1$ output bits so that the $(N + 1)$'th output bit provides the error signal.

On the other hand, when a PSK signal in which the difference between the demodulated levels is not uniform is involved, a mere single output bit of an A/D converter cannot provide the error signal.

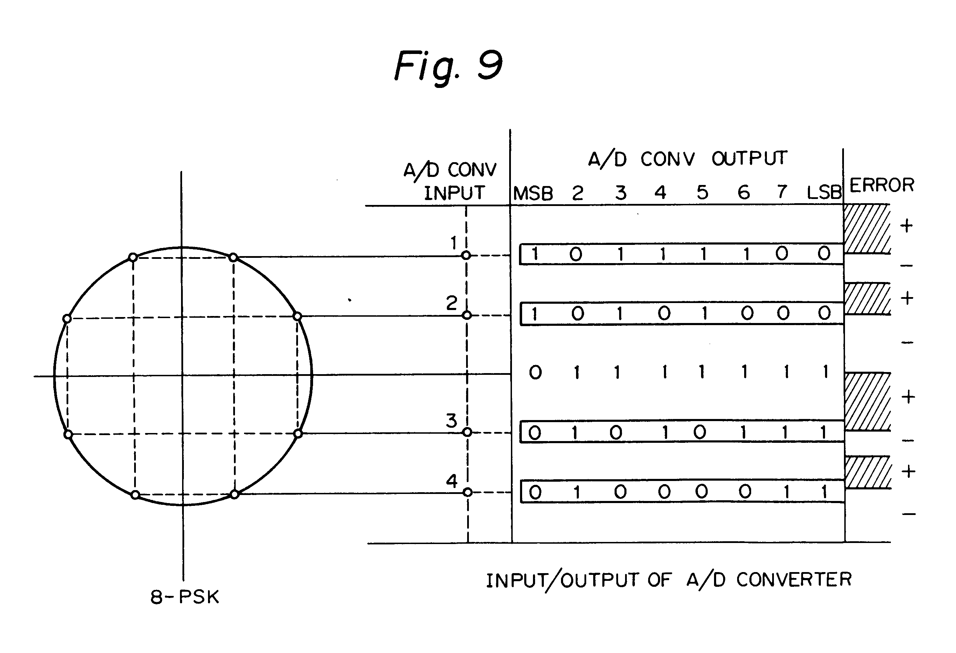

In the case of an 8 PSK signal, the operation of the error signal detector by an A/D converter is shown in Fig. 9, where the A/D converter has 8 output bits. When the 8 PSK signal is detected by a quadrature phase detector, the detected baseband signal has 4 levels, the difference of which is not uniform. When the 4 levels are (10111100), (10101000), (01010111) and (01000011), as shown in Fig. 9, the error signal in the shaded area in Fig. 9 is positive, and the error signal in the non-shaded area is negative. Therefore, the error signal detector is designed so that 8 bits of the output signal of the A/D converter are monitored, and when the output signal resides in the shaded area in Fig. 9, it provides a positive error signal. Otherwise, it provides a negative error signal. That operation is implemented by a simple conversion circuit which has a ROM.

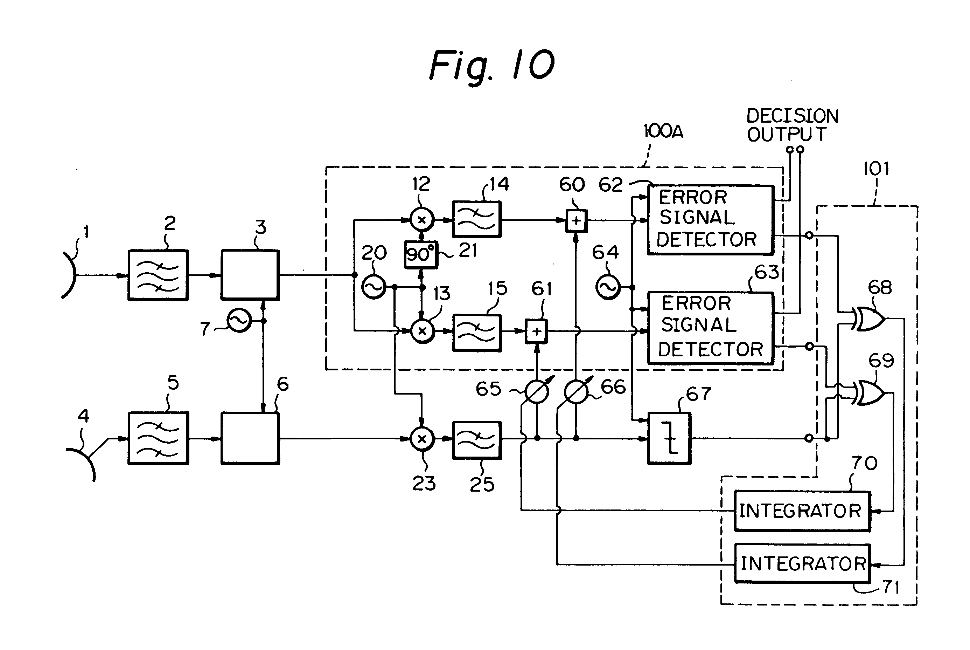

Fig. 10 shows still another comparative example. The feature of the example shown in Fig. 10 resides in that the cancellation of the interference signal is effected for a baseband signal at the output of a quadrature phase detector, while the previous example effected the cancellation for an IF signal (or an RF signal).

In Fig. 10, the numerals 1-7 are the same as those in Fig. 6. The demodulator 100A in Fig. 10 has quadrature phase detectors 12 and 13 which take the recovered reference carrier wave 20 for quadrature phase detection. The outputs of those detectors 12 and 13 are applied to the low-pass filters 14 and 15, respectively, to provide an in-phase baseband signal and a quadrature baseband signal. A 90° phase shifter is provided at one of the quadrature phase detectors 12 and 13. On the other hand, the interference signal is phase-detected by the phase detector 23 which has the same carrier wave as that of the quadrature phase detectors 12 and 13. A baseband signal of the interference signal is obtained at the output of a low-pass filter 25 which is coupled to the output of the phase detector 23. A baseband interference signal at the output of the low-pass filter 25 is added to an in-phase component and a quadrature component of the main signal by the combiners 60 and 61, respectively, through a pair of bipolar attenuators 66, and 65, respectively. The bipolar attenuators 65 and 66 can adjust the level of an input signal which has either a positive level or a negative level. Hence, an interference signal in the main signal is cancelled by the combiners 60 and 61. A pair of error signal detectors 62 and 63 are coupled to the outputs of the combiners 60 and 61, to pick up a residual interference component in the main signal.

When the main signal is a 16 QAM signal, the demodulated baseband signal is a 4-level signal, and each error signal detector 62 and 63 is implemented by an A/D converter which has more than 3 output bits. The first two bits of the output of the A/D converter are the decision outputs of the baseband digital signal, and the third bit is the error signal, as described with reference to Fig. 4. The A/D converter uses a sampling clock signal 64 which is recovered by a demodulator 100A. Similarly, the interference signal is decided by the decision circuit 67 which uses the common clock signal 64 as that of the main signal. The control signal of the bipolar attenuators 65 and 66 is obtained from the correlation circuit 101, which makes a correlation between the error signal in the main signal and the interference signal.

The correlation circuit 101 has a multiplier 69 which provides the product of the interference signal at the output of the decision circuit 67 and the error signal detector 63 for the in-phase component. The output of the multiplier controls the bipolar attenuator 65 which is inserted in the in-phase path of the main signal, through the low-pass filter 70 (or integrator). Similarly, another multiplier 68 provides the product of the interference signal at the output of the decision circuit 67 and the error signal at the output of the error signal generator 62 for the quadrature component. The product of the multiplier 68 controls the bipolar attenuator 66 in the quadrature path of the main signal through the low-pass filter 71. The multipliers 68 and 69 are implemented by an exclusive-OR circuit, since both input signals of the multipliers are binary signals. Thus, an interference component included in the main signal is cancelled.

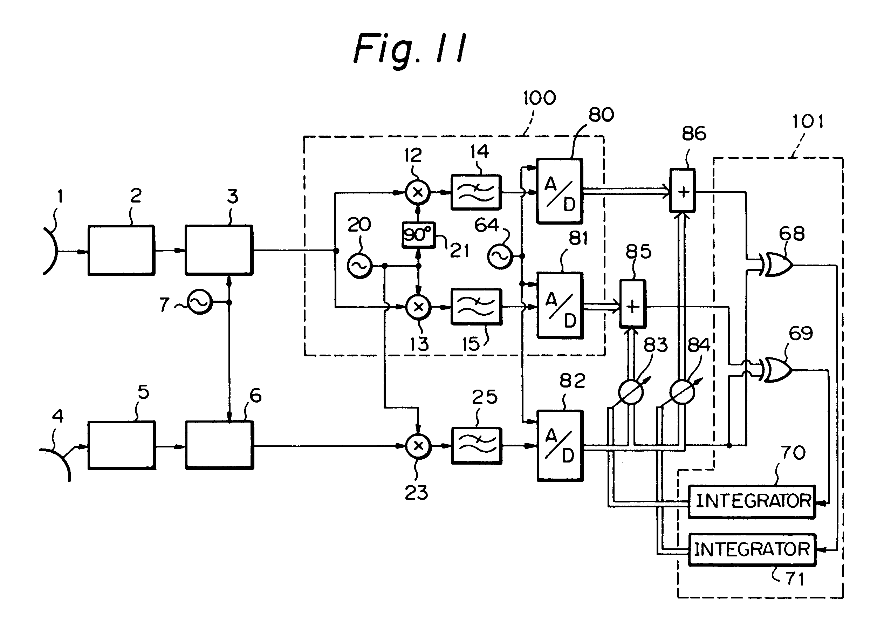

Fig. 11 shows a modification of the comparative example shown in Fig. 10. The feature of Fig. 11 is that the interference cancellation is carried out by a digital circuit. In Fig. 11, the demodulated baseband signals at the outputs of the low-pass filters 14 and 15 (an in-phase component and a quadrature component) are applied to A/D converters 80 and 81 which have sufficient quantization accuracy as compared with the number of levels of the demodulated baseband signal. The sampling timing clock 64 is the recovered clock signal from the main signal. Similarly, the interference signal at the output of the low-pass filter 25 is applied to the A/D converter 82, which has sufficient quantization accuracy, and is supplied with the clock 64 which is recovered from the main signal. When the main signal is a 16 QAM signal, the A/D converters 80, 81 and 82 preferably have 8 output bits.

The output of the A/D converter 82 is applied to the bipolar variable attenuators 83 and 84, which are able to calculate both positive values and negative values. The bipolar variable attenuator is implemented by a digital multiplier having 8x6 bits (8 bits of multiplicand and 6 bits of multiplier). The output (8 bits) of the multiplier 83, and the output (8 bits) of the A/D converter 81 which handles the in-phase component of the main signal, are added in the full adder 85. The adder 85 provides the output (8 bits) of the in-phase component which is free from interference. Similarly, a full adder 86 provides the sum of the output of the bipolar variable attenuator 84 and the output of the A/D converter 80 for providing a compensated quadrature component.

The highest two bits of the output of each of the adders 85 and 86 are decision bits of a 4-level signal, and the other output bits (3rd bit to 8th bit) of the adders 85 and 86 are error signals. The third bit of the adders 85 and 86 shows the sign of the error signal. The highest bit (MSB) of the A/D converter 82 which digitalises the interference signal shows the sign or the polarity of the interference signal.

The correlation of the error signal and the interference signal in Fig. 11 is achieved only by handling signs of each signal. The sign of the interference signal (the MSB of the A/D converter 82) and the sign of the in-phase error signal (the 3rd bit of the adder 85) are applied to a multiplier 69, which is implemented by an exclusive-OR circuit. The output of the exclusive-OR circuit 69 is applied to a digital integrator 70, and the 6 bits of the output of the integrator 70 are applied to the bipolar variable attenuator 83 as a control signal of the attenuator. Similarly, the sign of the interference signal (the MSB of the A/D converter 82) and the sign of the quadrature error signal (3rd bit of the adder 86) are applied to the digital multiplier 68, which is implemented by an exclusive-OR circuit. The output of the exclusive-OR circuit 68 is applied to a digital integrator 71, the 6 output bits of which are applied to the bipolar variable attenuator 84 as a control signal for the quadrature component. Therefore, the interference cancellation is carried out for a baseband signal by using only a digital circuit (an analog circuit is not used). Each of the digital integrators 70 and 71 is implemented by an up-down counter, which has more than 6 bits. The product of the exclusive-OR circuit is applied to an up-down input terminal of the counter, and the highest 6 bits of the counter are used as a control signal which is applied to a bipolar variable attenuator.

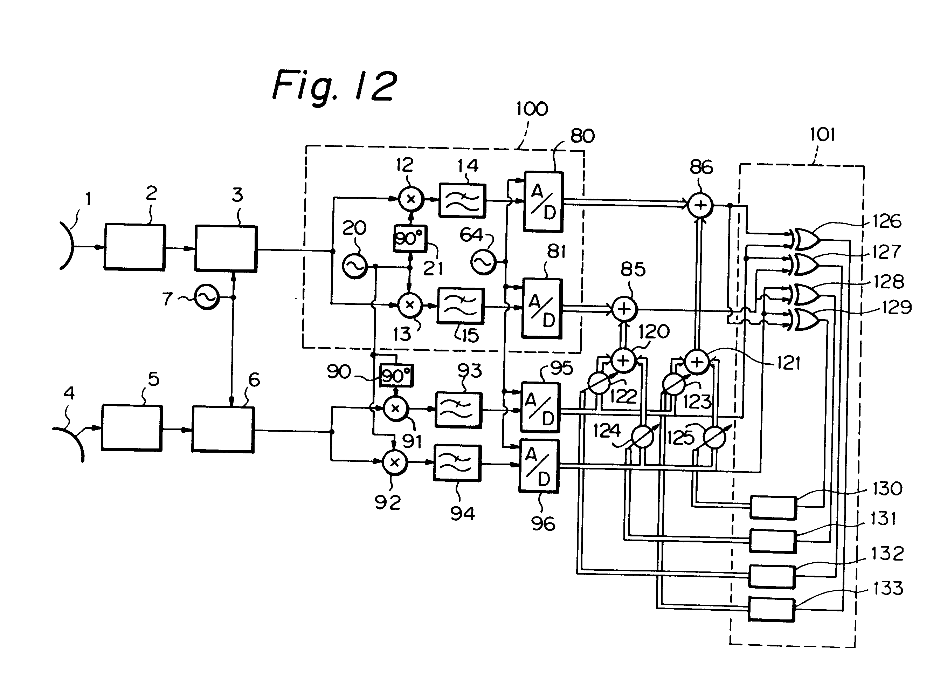

Fig. 12 shows a first embodiment of the present invention, in which the interference cancellation is carried out for a baseband signal by using only a digital circuit. The interference signal in Fig. 12 is demodulated by a quadrature phase detector 91, 92, 93, 94, whereas a phase detector 23, 25 is used in Fig. 11. Therefore, the operation of Fig. 12 is similar to that of Fig. 5, except that the cancellation is carried out for the baseband signal, and that only a digital circuit is used. In Fig. 12, the system comprises A/D converters 80, 81, 95 and 96, full adders 120, 121, 85 and 86, bipolar variable attenuators 122, 123, 124 and 125 which are implemented by digital multipliers, multipliers 126, 127, 128 and 129 which are implemented by exclusive-OR circuits, and low-pass filters or digital integrators 130, 131, 132 and 133 which are implemented by up-down counters.

When a combiner is inserted in a baseband stage, it is preferable to use a quadrature phase detector for demodulating the interference signal. In that case, any interference signal may be compensated. When just a phase detector is used for the interference signal and a combiner is in the baseband stage, the interference signal to be compensated for must satisfy some conditions.

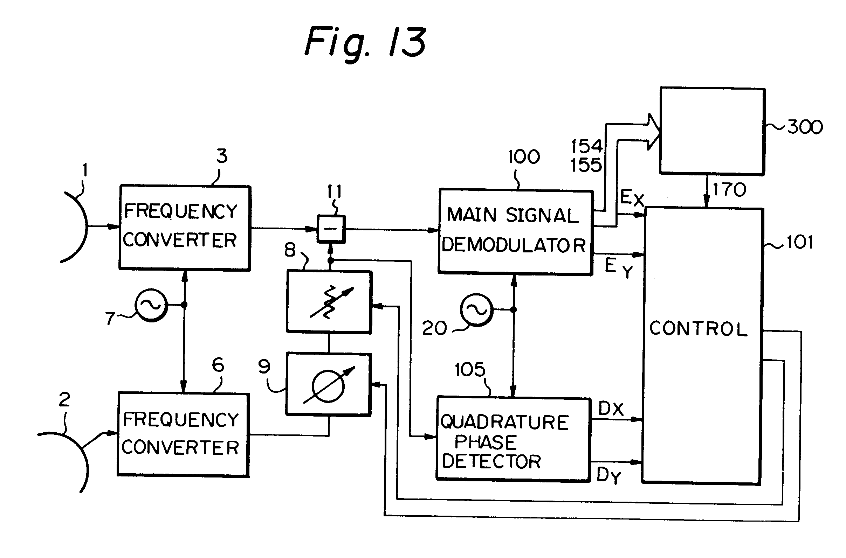

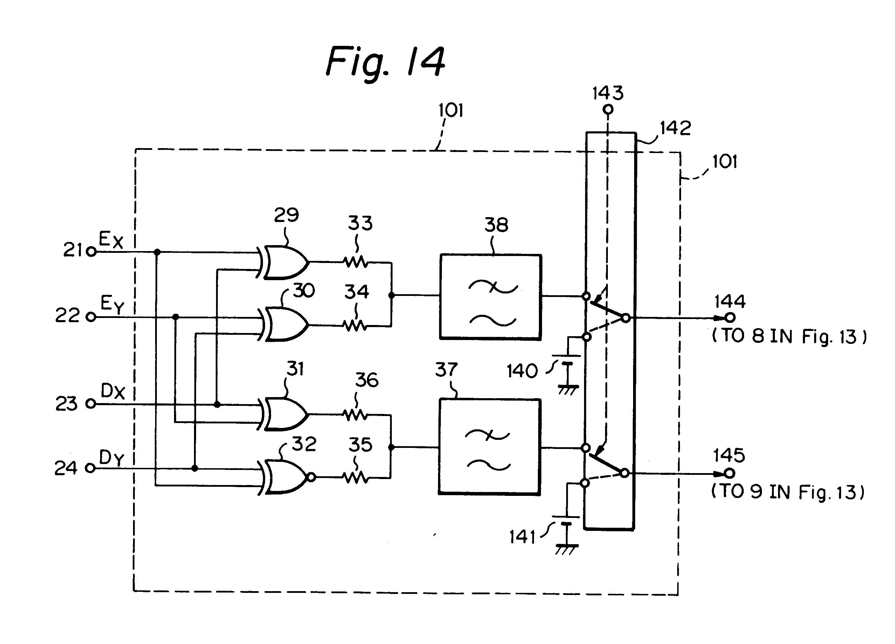

One of the modifications of the present invention is now described with reference to Figs. 13 to 15. That modification has a feature that the interference cancellation described with reference to Figs. 1 to 12 is effected only when the received signal is in a synchronized condition. It should be appreciated that the circuit of the present invention operates correctly only if the received signal is in the synchronized condition. If the received signal is asynchronous, the error signal detected by the circuit of the present invention is incorrect, and therefore a variable attenuator and/or a variable phase shifter for interference cancellation cannot be controlled correctly. If the present compensation system were operated in an asynchronous condition, it would not only operate incorrectly, but would also degrade the desired main signal.

Therefore, the modification shows in Figs. 13 to 15 has a switching circuit which enables the interference compensation operation only when the received signal is in synchronized condition.

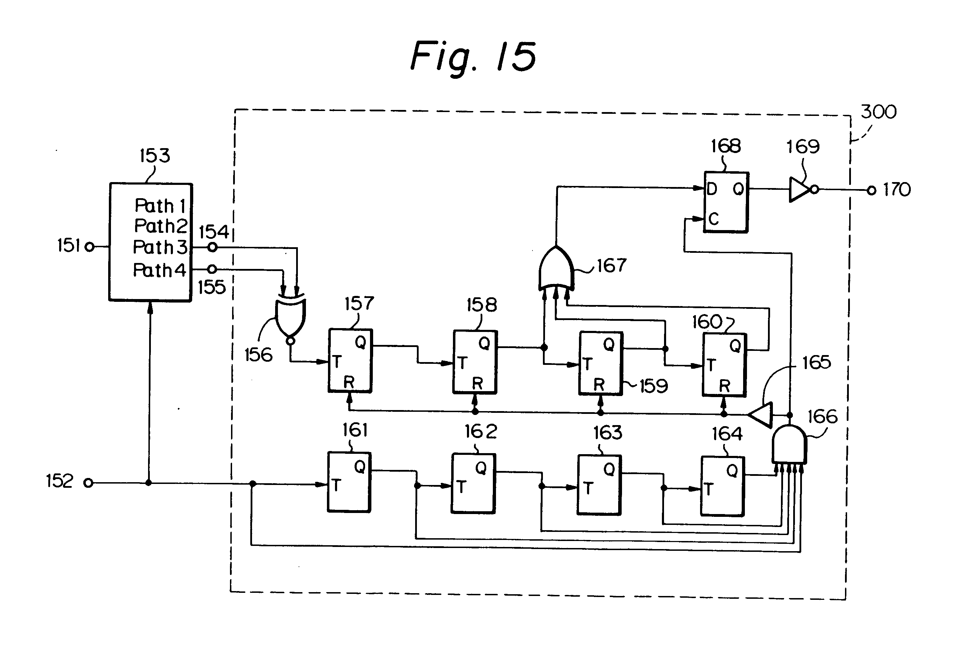

Fig. 13 is a brief block diagram, which is applicable to all of the comparative examples and the first embodiment described. For the sake of easy understanding, the embodiment of Figs. 13 to 15 is directed to a modification of the comparative example of Fig. 3. In comparing Fig. 13 with Fig. 3, the modification of Fig. 13 has the features that a synchronization detection circuit 300 is provided, and that an analog switch 143 (in Fig. 14) is provided in the control circuit 101. An embodiment of the synchronization detection circuit 300 is shown in Fig. 15.

It is assumed that the desired main signal is a 16 QAM signal, which provides a 4-level in-phase component, and a 4-level quadrature component. The in-phase component is applied to an A/D converter which operates as a decision circuit as described before. It is assumed that the A.D converter has more than 4 output bits, although the A/D converter in the previous embodiments for a 16 QAM signal has only 3 bits. The first output bit (the Most Significant Bit) of the A/D converter, and the second bit of that output, indicate the decision signals of a desired signal. The third bit of the A/D converter indicates the sign (positive or negative) of an error signal as described before. Therefore, the third bit $E_x$ of the in-phase component, and the third bit $E_y$ of the quadrature component are applied to the control circuit 101. The fourth bit of the A/D converter indicates the amplitude of the error signal. Accordingly, an exclusive-NOR circuit 156 (Fig. 15) which provides the exclusive-NOR logic operation between the third bit and the fourth bit of the A/D converter provides an output signal which relates to the amount of intersymbol interference. When the output of the exclusive-NOR circuit 156 is "0", the intersymbol interference is small, and when that output is "1", the intersymbol interference is large. The synchronization detection circuit in Fig. 15 recognises the asynchronisation condition when there exist more than 2 time slots which have a large intersymbol interference in $2^4 = 16$ time slots. The system is in a synchronized condition when the number of time slots which have a large intersymbol interference is less than that value ($=2$). In Fig. 15, the circuit comprises flip-flops 157, 158, 159, 160, 161, 162, 163, 164 and 168, a delay gate 165, an inverter 169, an AND circuit 166, an OR circuit 167, and an output terminal 170. The output signal at the output terminal 170 is "1" when it is synchronous, and that output signal is "0" when it is asynchronous. The output signal at the terminal 170 is applied to the analog switch control 143 of the switch 142 (Fig. 14). Accordingly, when it is synchronized, the control signal at the output of the low-pass filters (or integrators) 37 and 38 is coupled to the output terminals 145 and 144 in order to control the variable attenuator 8 (Fig. 13) and the variable phase shifter 9 (Fig. 13). When it is in an asynchronous condition, the fixed potentials 140 and 141 are applied to the variable attenuator 8 and the variable phase shifter 9 through the output terminals 144 and 145. The interference cancellation stops, of course, when the fixed potentials are provided. The analog switch 142 in Fig. 14 is implemented either by a conventional relay switch, or a conventional semiconductor analog switch. The fixed potential is designed so that the output level of the variable attenuator is minimised.

As described above in detail, in the present invention the compensation signal has the same amplitude as, and the opposite phase to, that of interference included in the desired main signal. The interference signal is not restricted to a particular modulation signal, and any modulation signal is compensated.

Further it should be noted that the demodulator for the main signal doubles as the error signal detector of the present invention. Therefore, no additional circuit to act as an error signal detector is required in the present invention. All that are required in the present invention to modify a conventional receiver for interference compensation are a phase detector for the interference signal, a multiplier (or an exclusive-OR circuit) and a low-pass filter for taking correlation between the interference signal and the error signal. An A/D converter is included inherently in a QAM receiver, so no additional A/D converter is required in the present invention.

Therefore, a simple circuit is provided which can control a variable attenuator and a variable phase shifter to cancel the interference component.

## Claims

1. An interference cancellation system, comprising signal reception means which receive a desired digital signal and an undesired interference signal; a control means (122-129) for providing a compensation signal having substantially the same amplitude as that of the interference component in the main signal and in anti-phase thereto; a combiner (85,86,120,121) for combining the main signal and an output of the control means to cancel the interference component in the main signal; a first quadrature phase detector (12,13); a phase detector (91,92,93,94) for phase detecting the interference signal, an error signal detector (80,81) and correlation means (101) for providing correlation between the output of the error signal detector and the output of the phase detector for the interference signal; the control means being controlled by the output of the correlation means; the signal reception means comprising a main signal reception means (1) which receives a desired digital signal and an undesired interference signal and auxiliary signal reception means (4) for receiving the undesired interference signal; characterised in that the first quadrature phase detector (12,13) demodulates the main signal; in that the phase detector (91,92,93,94) for phase detecting the interference signal is a second quadrature phase detector; in that the second quadrature phase detector (91,92,93,94) is supplied with a clock signal obtained by the first quadrature phase detector; in that a decision circuit (80,81) is coupled to the output of the first quadrature phase detector (12,13) to provide a demodulated digital signal; in that the error signal detector (80,81) provides the difference between the decision level of the digital signal and the output of the first quadrature phase detector and that the error signal detector (80,81) is implemented by an A/D converter which doubles as the decision circuit; and in that the combiner (85,86,120,121) is inserted in a baseband stage.

2. A system according to claim 1, characterised in that the correlation means (101) comprises at least two multipliers (126-129) for providing the product of the error signal of an in-phase component and the interference signal, and the product of an error signal of a quadrature component and the interference signal, and at least two low-pass filters (130-133) each coupled to the related output of the multipliers, so that outputs of the low-pass filters control the amplitude and the phase of the control means (122-129).

3. A system according to claim 2, characterised in that each multiplier (126-129) is implemented by an exclusive-OR circuit, and each low-pass filter (130-133) is implemented by a digital integrator.

4. A system according to any preceding claim, characterised in that the correlation means (101) includes a switch (142) which supplies a correlation signal to the control means (122-129) only when a receiver is in a synchronized condition; and the switch supplies a fixed control signal to the control means when the receiver is in an asynchronous condition.

**Revendications**

1. Système d'annulation d'interférence, comprenant des moyens récepteurs de signaux qui reçoivent un signal numérique voulu et un signal d'interférence non voulu; des moyens de commande (122-129) pour fournir un signal de compensation ayant effectivement la même amplitude que celle de la composante d'interférence dans le signal principal et en opposition de phase par rapport à celui-ci; un combineur (85,86,120,121) pour combiner le signal principal et le signal de sortie des moyens de commande afin d'annuler la composante d'interférence dans le signal principal; un premier détecteur de phase en quadrature (12,13); un détecteur de phase (91,92,93,94) pour détecter la phase du signal d'interférence, un détecteur de signal erroné (80,81) et un moyen de corrélation (101) pour fournir une corrélation entre le signal de sortie du détecteur de signal erroné et le signal de sortie du détecteur de phase pour le signal d'interférence; les moyens de commande étant commandés par le signal de sortie du moyen de corrélation; les moyens récepteurs de signaux comprenant un moyen récepteur de signaux principal (1) qui reçoit un signal numérique voulu et un signal d'interférence non voulu et un moyen récepteur de signaux auxiliaire (4) pour recevoir le signal d'interférence non voulu; caractérisé en ce que le premier détecteur de phase en quadrature (12,13) démodule le signal principal; en ce que le détecteur de phase (91,92,93,94) pour détecter la phase du signal d'interférence est un deuxième détecteur de phase en quadrature ; en ce que le deuxième détecteur de phase en quadrature (91,92,93,94) reçoit un signal d'horloge obtenu par le premier détecteur de phase en quadrature; en ce qu'un circuit de décision (80,81) est couplé à la sortie du premier détecteur de phase en quadrature (12,13) pour fournir un signal numérique démodulé; en ce que le détecteur de signal erroné (80,81) fournit la différence entre le niveau de décision du signal numérique et le signal de sortie du premier détecteur de phase en quadrature et en ce que le détecteur de signal erroné (80,81) est réalisé au moyen d'un convertisseur analogique-numérique A/N qui double comme circuit de décision; et en ce que le combineur (85,86,120,121) est inséré dans un étage de bande de base.

2. Système selon la revendication 1, caractérisé en ce que le moyen de corrélation (101) comprend au moins deux multiplicateurs (126-129) pour fournir le produit du signal erroné d'une composante en phase et du signal d'interférence; et le produit d'un signal erroné d'une composante en quadrature et du signal d'interférence, et au moins deux filtres passe-bas (130-133) couplés chacun à la sortie associée des multiplicateurs, de telle sorte que les signaux de sortie des filtres passe-bas contrôlent l'amplitude et la phase des moyens de commande (122-129).

3. Système selon la revendication 2, caractérisé en ce que chaque multiplicateur (126-129) est réalisé au moyen d'un circuit OU-Exclusif, et chaque filtre passe-bas (130-133) est réalisé au moyen d'un intégrateur numérique.

4. Système selon l'une quelconque des revendications 1 à 3, caractérisé en ce que le moyen de corrélation (101) comprend un commutateur (142) qui fournit un signal de corrélation aux moyens de commande (122-129) uniquement quand un récepteur est dans un état synchronisé; et le commutateur fournit un signal de commande fixe aux moyens de commande quand le récepteur est dans un état asynchrone.

## Patentansprüche

1. System zum Beseitigen von Störungen, mit Signalempfangsmitteln, die ein gewünschtes digitales Signal und ein unerwünschtes Störsignal empfangen; einem Steuermittel (122-129) zur Bildung eines Kompensationssignals, das im wesentlichen die gleiche Amplitude wie die Störkomponente in dem Hauptsignal aufweist und gegenphasig zu dieser ist; einem Summierer (85, 86, 120, 121) zum Summieren des Hauptsignals und eines Ausgangssignals des Steuermittels, um die Störkomponente im Hauptsignal zu beseitigen; einem ersten Rechtwinkelphasendetektor (12, 13); einem Phasendetektor (91, 92, 93, 94) zur Phasendetektion des Störsignals, einem Fehlersignaldetektor (80, 81) und Korrelationsmitteln (101) zur Bildung einer Korrelation zwischen dem Ausgangssignal des Fehlersignaldetektors und dem Ausgangssignal des Phasendetektors für das Störsignal; wobei das Steuermittel durch das Ausgangssignal der Korrelationsmittel gesteuert wird; die Signalempfangsmittel ein Hauptsignalempfangsmittel (1), das ein gewünschtes digitales Signal und ein unerwünschtes Störsignal empfängt, und Hilfssignalempfangsmittel (4) zum Empfangen des unerwünschten Störsignals aufweisen, dadurch gekennzeichnet, daß der erste Rechtwinkelphasendetektor (12, 13) das Hauptsignal demoduliert; daß der Phasendetektor (91, 92, 93, 94) für die Phasendetektion des Störsignals ein zweiter Rechtwinkelphasendetektor ist; daß dem zweiten Rechtwinkelphasendetektor (91, 92, 93, 94) ein Taktsignal zugeführt wird, das durch den ersten Rechtwinkelphasendetektor gewonnen wird; daß eine Entscheidungsschaltung (80, 81) mit dem Ausgang des ersten Rechtwinkelphasendetektors (12, 13) verbunden ist, um ein demoduliertes digitales Signal zu bilden; daß der Fehlersignaldetektor (80, 81) die Differenz zwischen dem Entscheidungspegel des digitalen Signals und dem Ausgangssignal des ersten Rechtwinkelphasendetektors bildet und daß der Fehlersignaldetektor (80, 81) durch einen A/D-Umsetzer realisiert ist, der auch die Entscheidungsschaltung bildet; und daß der Summierer (85, 86, 120, 121) in eine Basisbandstufe eingefügt ist.

2. System nach Anspruch 1, dadurch gekennzeichnet, daß das Korrelationsmittel (101) wenigstens zwei Multiplizierer (126-129) zur Bildung des Produktes aus dem Fehlersignal einer phasengleichen Komponente und dem Störsignal und des Produktes aus einem Fehlersignal einer um 90° phasenverschobenen Komponente und dem Störsignal sowie wenigstens zwei Tiefpaßfilter (130-133) aufweist, die jeweils mit dem zugeordneten Ausgang des Multiplizierers verbunden sind, so daß Ausgangssignale der Tiefpaßfilter die Amplitude und Phase des Steuermittels (122-129) steuern.

3. System nach Anspruch 2, dadurch gekennzeichnet, daß jeder Multiplizierer (126-129) durch eine Exklusiv-ODER-Schaltung und jedes Tiefpaßfilter (130-133) durch einen digitalen Integrator realisiert ist.

4. System nach einem der vorstehenden Ansprüche, dadurch gekennzeichnet, daß das Korrelationsmittel (101) einen Schalter (142) aufweist, der dem Steuermittel (122-129) nur dann ein Korrealtionssignal zuführt, wenn ein Empfänger einen synchronisierten Zustand aufweist; und der Schalter dem Steuermittel ein festes Steuersignal zuführt, wenn der Empfänger einen asynchronen Zustand aufweist.

Fig. 1

# Fig. 2

ERROR SIGNAL

E

$(f(t)+\triangle r)\cdot e^{j(\omega_2 t+\pi+\theta+\triangle\theta)}$

$r\cdot e^{j(\omega_2 t+\theta)}$

INTERFERENCE SIGNAL WITH
AMPLITUDE AND PHASE
CONTROLLED

INTERFERENCE COMPONENT
IN MAIN SIGNAL

13

Fig. 3

# Fig. 4

| | Path 1 | Path 2 | Path 3 | Path 4 |
|---|---|---|---|---|
| | | | 1 | 1 |
| | | 1 | | O |
| | | | O | 1 |
| | 1 | | | O |
| | | | 1 | 1 |
| | | O | | O |
| | | | O | 1 |
| | | | | O |
| | | | 1 | 1 |
| | | 1 | | O |
| | | | O | 1 |
| | O | | | O |
| | | | 1 | 1 |
| | | O | | O |
| | | | O | 1 |
| | | | | O |

4-LEVEL SIGNAL

DECISION SIGNAL

ERROR SIGNAL

INPUT RANGE A/D CONVERTER

Fig. 5

Fig. 6

EP 0 228 786 B1

Fig. 7

Fig. 8

# Fig. 9

EP 0 228 786 B1

8-PSK

| A/D CONV INPUT | A/D CONV OUTPUT | | | | | | | | ERROR |
|---|---|---|---|---|---|---|---|---|---|
| | MSB | 2 | 3 | 4 | 5 | 6 | 7 | LSB | |
| 1 | 1 | 0 | 1 | 1 | 1 | 1 | 0 | 0 | + / − |
| 2 | 1 | 0 | 1 | 0 | 1 | 0 | 0 | 0 | + / − |
| | 0 | 1 | 1 | 1 | 1 | 1 | 1 | 1 | + |
| 3 | 0 | 1 | 0 | 1 | 0 | 1 | 1 | 1 | − / + |
| 4 | 0 | 1 | 0 | 0 | 0 | 0 | 1 | 1 | + / − |

INPUT/OUTPUT OF A/D CONVERTER

# Fig. 10

EP 0 228 786 B1

Fig. II

Fig. 12

EP 0 228 786 B1

# Fig. 13

EP 0 228 786 B1

Fig. 14

*Fig. 15*

# Fig. 16  PRIOR ART

OUTPUT

201
202
203 AMP-PHASE CONTROL
204
205 CORRELATION DETECTOR
206
207 f-CONV
208 f-CONV
209 LPF